# EUROPEAN PATENT SPECIFICATION

(11) **EP 2 614 345 B1**
(45) Date of publication and mention of the grant of the patent: **19.06.2019**
(21) Application number: 11823847.6
(22) Date of filing: 05.09.2011
(51) Int. Cl.: G01L 5/06, B60P 7/08, G01L 5/10

(54) **DEVICE FOR CONTROLLING OR MEASURING THE TENSILE FORCE IN STRAPS, ROPES OR OTHER FASTENING DEVICE**
VORRICHTUNG ZUR STEUERUNG ODER MESSUNG DER ZUGKRAFT IN BÄNDERN, SEILEN ODER ANDEREN BEFESTIGUNGSVORRICHTUNGEN
DISPOSITIF POUR VÉRIFIER OU MESURER LA FORCE DE TRACTION DE SANGLES, DE CÂBLES OU D'UN AUTRE DISPOSITIF DE FIXATION

(30) Priority: 09.09.2010 SE 1050931
(43) Date of publication of application: 17.07.2013
(73) Proprietor: Stimp Innovation AB, 598 21 Vimmerby (SE)
(72) Inventor: HJELTE, Sven, S-598 39 Vimmerby (SE)
(74) Representative: Zacco Sweden AB
(86) International application number: PCT/SE2011/051068
(87) International publication number: WO 2012/033447

(56) References cited:
- US-A- 3 174 334
- US-A- 3 174 334
- US-A- 3 484 807
- US-A- 3 484 807
- US-A- 3 618 379
- US-A- 3 618 379
- US-A- 5 133 217
- US-A- 5 133 217

## Description

### TECHNICAL FIELD

The present invention relates to a device for measuring or controlling the tensile force in a strap, which for example is intended for the lashing of a load. The device comprises a first abutment element and a second abutment element, which are arranged in a first plane, and which, in position of use for measuring or controlling the tensile force, are intended to come into contact with a side of a strap or similar forming a lower side facing the load, and a third element, which comprises a pressure-sensitive means, which, in position of use, is intended to come into contact with, or to be actuated by, said strap from the opposite side, the upper side. The first and second abutment elements are arranged at substantially the same distance from, and symmetrically in relation to, the third element. The invention also relates to a method for measuring or controlling the tensile force in a strap, rope or other fastening device by means of such a device.

### TECHNICAL BACKGROUND

It is of great importance to be able to ensure that a load of any kind is fastened or especially lashed in a satisfactory way. To a greater and greater extent it is required that loads, which, for example, are transported by truck, train, airplane or different waterborne ships, are lashed in a secure way, and also that loads, which more or less are temporarily stored in a stationary position, are correctly secured. For different transportations there are regulations and laws which have to be complied with. Frequently, a load being lashed has to be restrapped, since the strap loses its tensile force in the course of time and may need to be restrapped. Unexpected events, vibrations, violent stops or other sorts of stresses may also cause that the tensile force decreases. For example, the tensile force may decrease as time goes on and lose some of its tensile force, for example up to 7%, which makes it necessary to control the lashing of a load regularly. Also changes of the shape or solidness of a load might result in a change of the tensile force. For transportations controls arranged and performed by authorities, such as for example the police, are also carried out.

Various devices are known for measuring tensile force, for example by GB-A-2 063 494, EP-A-1 783 473, EP-A-2 199 151, and DE-A-19 739 667. However, all these devices have in common that they are complex and difficult to mount. They are also bulky, expensive to manufacture and expensive to buy. Due to their complexity they are also sensitive to external influences, which, in its turn, might affect the reliability in operation. As a result known measuring devices are used to a less extent than would be necessary to ensure that a load is safely lashed and complies with the demands made to a required extent, on one hand in an initial phase when the load is strapped, but on the other hand also when the load is restrapped and all the time when the load is lashed, and, for example, transported.

US 3,618,379 discloses a device for comparing tension in stressed cables and wires including a frame element having first and second arms, the extremities of which engage a wire to be tested at a pair of spaced points along the wire, a central portion of the frame element supporting a resiliently urged plunger which selectively bears against a segment of the wire positioned between the arms, a scale fixed with respect to one of the arms, a pointer pivotally mounted on said frame element at one end thereof and having a free second end cooperating with the scale, pin means interconnecting movement of the plunger and the pointer, whereby the pointer may be used as a lever to position the plunger relative to said segment.

US 3,618,379 discloses a device for comparing tension in stressed cables and wires including a frame element having first and second arms, the extremities of which engage a wire to be tested at a pair of spaced points along the wire, a central portion of the frame element supporting a resiliently urged plunger which selectively bears against a segment of the wire positioned between the arms, a scale fixed with respect to one of the arms, a pointer pivotally mounted on said frame element at one end thereof and having a free second end cooperating with the scale, pin means interconnecting movement of the plunger and the pointer, whereby the pointer may be used as a lever to position the plunger relative to said segment.

### DESCRIPTION OF THE INVENTION

It is an object of the present invention to provide a portable device for control or measuring of the tensile force in straps, ropes or similar, which has been improved. A special object is to provide a particularly compact and simple device, which a person can carry easily. Furthermore, it is an object to provide a device, which is robust, durable and easy to use. A further object is to provide a device, which is cheap to manufacture. A further object is to provide a device, which is dependable in service and resistant and which does not require much maintenance, and which is particularly easy to mount.

One or more of these objects are reached by means of a device, in which said first and second abutment elements are associated with a respective outer end portion of first and second connecting elements, respectively, whereby respective inner end portions of said first and second connecting elements are firmly associated with or integral with said third element.

The first and second abutment elements are provided with outer, free end portions, which extend parallel to one another in said first plane, and which point substantially in opposite directions.

The first and second connecting elements are arranged to form a first and a second intermediate portion, respectively, where there is a transition to said first plane, in which the abutment elements are arranged. The first intermediate portion is designed to form a first angle, so that a first longitudinal lateral edge of a strap or similar can be surrounded in the transition. Correspondingly, the second intermediate portion is designed to form a second, opposite angle in order to allow surrounding in the transition of a second longitudinal lateral edge opposite to said first lateral edge of the strap or similar, the tension of which is to be measured. The pressure-sensitive means, is designed, in position of use, directly or indirectly, by means of indication members, to provide information relating to the current tensional force in the strap, rope or similar.

In a particularly advantageous embodiment the first and second connecting elements are integral with the third element. Still more advantageously, the first and second connecting elements are integral with the first and second abutment elements, respectively, via said intermediate portions; especially advantageously integral with the third element as well as with the respective abutment elements, whereby an extraordinarily robust, stable and simple device is provided.

Of course, it is also possible to firmly associate the first and second connecting elements with the third element and/or with the abutment elements in other ways; for example by means of screws, bolts. Articulated connections, which are lockable for position of use, are also possible to use. Thereby, the device could be made still more compact for storage in position of non-use, but then it will comprise more components.

other preferred or alternative embodiments are indicated in various dependent claims. The contacting and indication members may be designed in many different ways in addition to the illustrated embodiments, where the pressure-sensitive organ comprises a spring-loaded base element, which is slidably arranged in a housing, and which exhibits a protruding contacting member adapted to come into contact with an upper side of a strap or similar in position of use. In such embodiments the base element is pressed upwards in the housing or the casing by the action of the spring. For example, then the opposite end of the base element will protrude upwards from the housing. By means of a scale indicating the tension, the tension can be read directly, or by means of markings it can be indicated whether the tension lies within an allowed or not allowed range or similar. As an alternative it is possible to use various sensors or detectors to detect or otherwise make possible the detection of a pressure on an organ by means of various known variants of sensors. The indication may also be effected in various ways, for example visually, acoustically, digitally, and so on. In a particular embodiment wireless transmission of data representing recorded current tensile force could be transmitted to a central device, which could be arranged in a vehicle, a ship or similar, on which the load is fastened or lashed, or centrally in another place. Automatically or by the action of personnel information could be transmitted, for example to a driver or similar. In such cases one or several devices according to the invention could be provided more or less stationary on a strap or similar.

In a preferred embodiment the device can be so designed that it, when placed on a strap or similar, the current tensile force of which is to be measured, can be turned round a vertical shaft through the centre of said third element, perpendicularly to said first plane, from a first use preparing position to a position of use. In the use preparing position the first free outer end is in a position very close to a first longitudinal lateral edge of a strap, and the second free outer end is in a position very close to the second, opposite, longitudinal lateral edge of a strap. In the position of use the first free outer end is very close to or outside, i.e. beyond, said second lateral edge, and said second free outer end is very close to or outside, beyond, said first lateral edge. When the measuring device is in the position of use, the strap abuts against said first and second abutment elements with its underside facing the load, and the pressure-sensitive organ on the upper side of the strap is via a contacting member directly or indirectly in contact with and is effected by the current tensile force of the strap.

It is an advantage with the invention that it is extraordinarily compact, easy to apply and remove. Furthermore, it is an advantage with the invention that it, when once mounted, stays safely in place, since the abutment elements come into contact from two opposite sides of the strap, which is substantially surrounded at its respective lateral edges and upper and lower sides by opposite abutment elements and connecting elements. A special advantage with the invention is also that it may be so designed, that it consists only of a few parts, especially if abutment elements, third element, and connecting elements are made in one piece. Thanks to this the device is also very insensitive to external influences, such as wind and weather, varying temperatures, dirt, discharges, oil, etc.

### SHORT DESCRIPTION OF THE DRAWINGS

In the following the invention will be described in an explaining and in no way limiting purpose with reference to the accompanying drawings, in which
- Fig. 1: illustrates a view of a first embodiment of the invention,
- Fig. 2: is a view from above of the device shown in Fig. 1,
- Fig. 3: illustrates the device substantially according to Fig. 1 in a use preparing position,
- Fig. 4: illustrates the device substantially according to Fig. 1 in position of use,
- Fig. 5: illustrates a section along the line A-A in Fig. 2,
- Fig. 6: is a lateral view of the device according to Fig. 3 illustrating how the pressure-sensitive means is effected by the tension in a strap,
- Fig. 7: is a lateral view which illustrates a pressure-sensitive organ with base element, contacting member and indication device in a special embodiment,
- Fig. 8: illustrates schematically a second embodiment of the invention,
- Fig. 9: illustrates schematically a third embodiment of the invention,
- Fig. 10: illustrates schematically a fourth embodiment of the invention,
- Fig. 11: is a schematical illustration of a fifth embodiment,
- Fig. 12: is a lateral view of the device in Fig, 11,
- Fig. 13: is a top view of the device in Fig. 11, and
- Fig. 14: is a cross-sectional side view of the device in Fig. 11.

### DETAILED DESCRIPTION

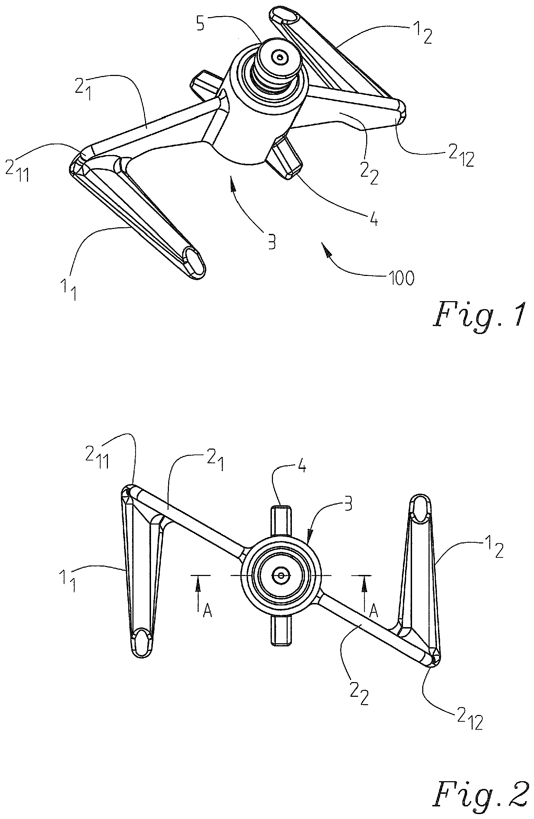

Fig. 1 illustrates a device 100 according to a first embodiment. First and second abutment elements 1₁, 1₂ are integral with first and second connecting elements 2_{1,} 2₂, which in its turn are firmly associated with, or integral with, a third element 3. Here the third element 3 consists of a housing or a casing, in which a pressure-sensitive means 4 is movably arranged and in position of use via contacting member (not shown in this figure) is adapted to abut against and be effected by a strap (not shown in this figure). Due to the tensile force in the strap the pressure-sensitive means 4 will be displaced upwards, and the indication member protrudes from the housing or the casing so that it, for example by means of markings or similar, is indicated how hard the strap is tightened. Thereby, the connecting elements 2₁, 2₂ are designed to, in position of use, be located above a strap and exhibit respective outer end portions 2₁₁, 2₁₂, which form transition angles to be transformed into said abutment elements 1₁, 1₂, which in position of use are to be situated under a strap or similar, the tensile force of which is to be measured.

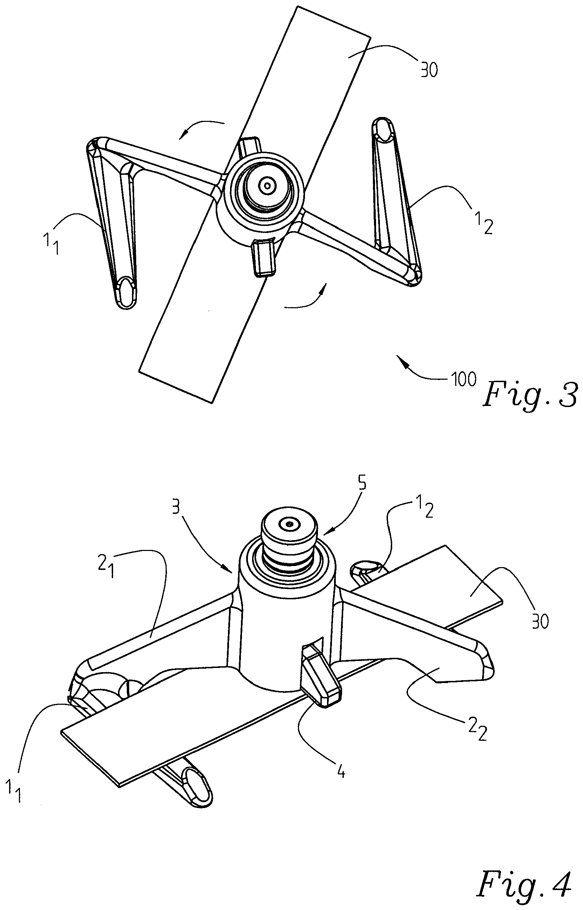

In the inner end portions of the connecting elements, opposite to said first and second outer end portions, they merge into or are firmly associated with the third element 3. The first abutment elements 1₁, 1₂ are lying in one and the same plane, have the same length, but extend in opposite directions. The connecting elements 2₁, 2₂ extend in a plane perpendicular to said first plane along a straight line, which plane cuts centrally through the housing and the pressure-sensitive means, organ, respectively, from the contacting member and in this case through the indication member 5. Apart from the outer end portions 2₁₁, 2₁₂ (the transitions) the connecting elements 2₁, 2₂ may be in a plane parallel to said first plane or in two planes inclined in opposite directions in relation thereto. They may also be curved or similar, the important thing is that they are associated with the third element in such a way, that their upper portion is above the abutment elements, in another plane. In position of use, when the current tensile force in a strap or similar is to be measured, the outer end portions, the transitions, are to be able to grasp both longitudinal sides of the strap. In use preparing position the device can easily engage with the strap, which will be more clearly illustrated with reference to Figs. 3 and 4. Preferably, the device consists of aluminium, at least the first and second abutment elements and the casing or the housing, and suitably also the pressure-sensitive means 4. In the illustrated embodiment it could instead be possible to use a clamp ring or a lock ring in order to ensure locking on the third element (housing/casing and indication members; shaft). Many various kinds of locking devices are possible, why this is only illustrated schematically. In the illustrated examples a "cap" is screwed on.

Fig. 2 illustrates the device shown in Fig. 1 as seen from above. Here the pressure-sensitive means 4 extends parallel to the first and second abutment elements 1₁, 1₂, but has a length which is slightly shorter than their length. Possibly, it might be replaceable, and various lengths may be chosen, for example depending on the width of the strap to be measured. In other embodiments it is not replaceable. According to a preferable embodiment the outer free end surfaces of the abutment elements 1₁, 1₂ are bevelled upwards, i.e. in position of use in direction towards a strap, the tensile force of which is to be measured, in order facilitate the application of the device and the transfer from a first use preparing position into position of use, respectively.

Fig. 3 illustrates a device 100 essentially as shown in Figs. 1 and 2 in a use preparing position. The cap could be replaced by an upper part which is fastened by means of screw/nut, lock washer. The device 100 is arranged above or on a strap 30, either when a load is lashed or in order to check an already lashed load. In order to measure when a load is lashed you can fasten a strap with a little prestressing, turn the device 100 around (in this case in clockwise direction), so that the abutment elements 1₁, 1₂ will be located underneath the strap 30, i.e. between load and strap (Fig. 4) . After that, the load may be strapped until the desired tensile force is indicated by means of the device 100. The device might also be used to control the tensile force in a lashing.

Fig. 4 illustrates the device 100 turned in counter clockwise direction into position of use with the abutment elements 1₁, 1₂ under strap 30, the pressure-sensitive organ in contact with the upper side of the strap 30, and indication members protruding in upwards direction. However, it should be clear that in order to bring the device from the use preparing position into position of use the position of the strap is normally not changed, since it is fastened. The fact that the position of the strap is different in Fig. 3 and Fig. 4 is only for the sake of clarity, and in practice the strap in Fig. 3 and in Fig. 4 shall be arranged in the same position and at the same angle. It is an advantage with the device 100 that it is small and compact and that it can easily be carried along, rapidly and easily be applied, and after checking the tensile force be removed (by rotation in the opposite direction, in this case counter clockwise), for example in order to move it to another place or carry it in a pocket or similar. Since the device is preferably made of aluminium it is also very easily carried.

An angle projected in a plane between the abutment element and the connecting element depends on design, widths of straps to be measured, and so on, but it might be between 30-90°, for example 35-55°, but the invention is not limited thereto.

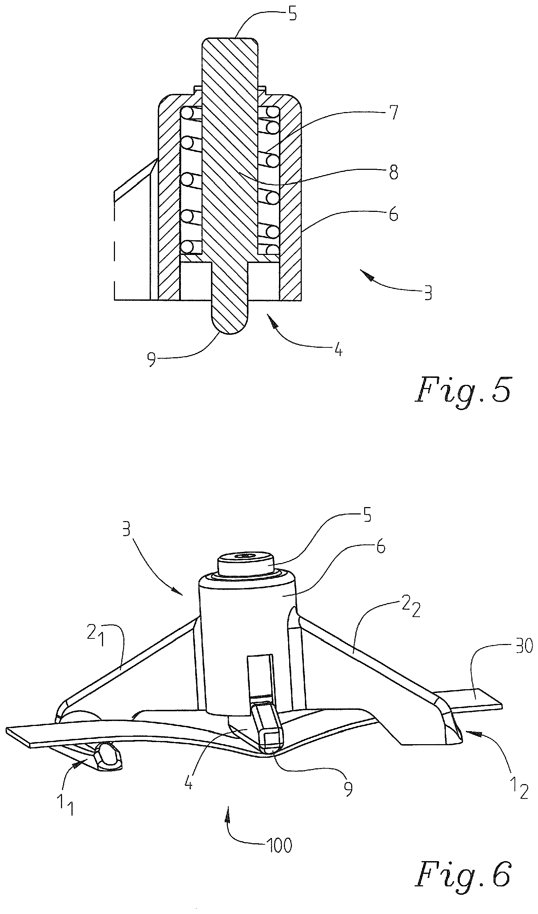

Fig. 5 is a cross section along the line A-A in Fig. 2, and is a cross section through the third element 3. The pressure-sensitive means 4 is displaceable in a housing or casing 6, which may be cylinder-shaped and which consists of a base element 8 biased by a spring 7, whereby the spring is accommodated in the housing between two limitation surfaces of the base element 8 in order to limit its movement upwards and downwards, respectively. At the lower end of the pressure-sensitive means 4, and preferably integrally with the base element 8, there is a contacting member 9, which in the position of use is adapted to come into contact with an upper side of a strap or similar in order to press the base element 8 upwards against the action of the spring 7, whereby the upper part of the pressure-sensitive means 4 is provided with an indication member 5, which may have the same cross sectional shape as the base element 8, and which may be pushed out through an opening in the housing or casing 6, or a hole in the upper limitation element (which may, of course, be constituted by an upper part of the housing).

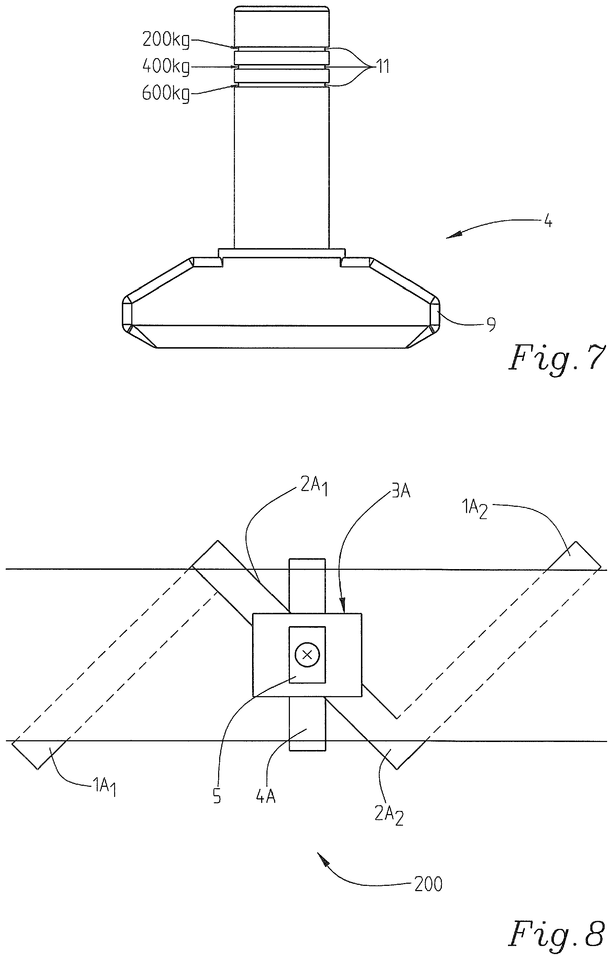

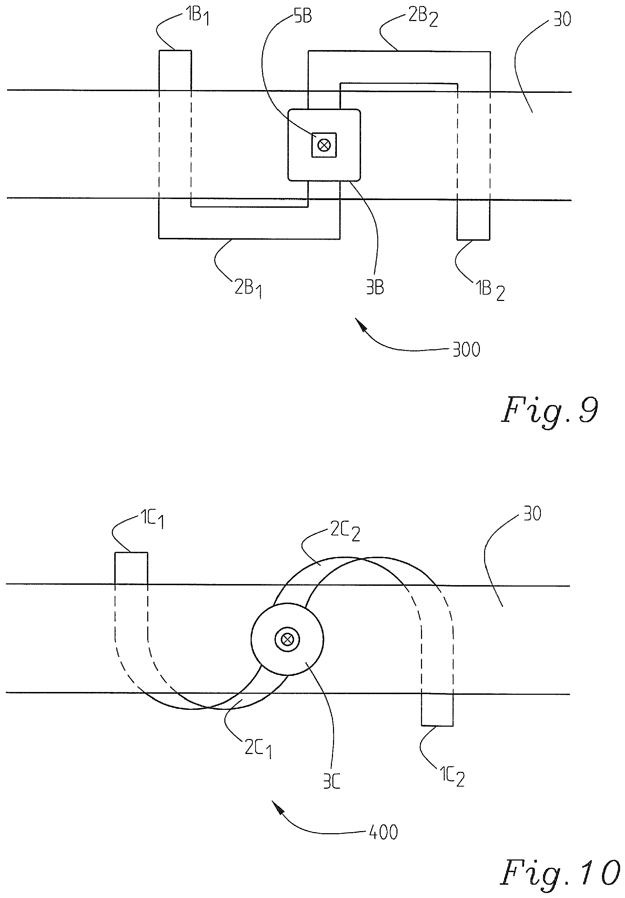

The indication member 5 may comprise or be provided with markings or similar, which are shown depending on how much the indication member is pushed out of the opening, as is shown in Fig. 7, for example, in which an example of markings is show, for instance corresponding to a tensile force of 200, 400, and 600 kg, respectively. Of course, the indication members may be designed in many various ways, see e.g. Figs. 10-14. Separate indication members may be provided, which are mechanically or electronically coupled to the base element and the contacting member 9, respectively, so that information about current tensile force is provided electronically or mechanically. Neither it is necessary that the indication member is pushed upwards or out of the housing, but various sensors or detectors may be used, whereby the spring may be dispensed with in certain embodiments. In one embodiment the indication member may be so designed, that indication is only effected if the size of the tensile force is not lying within a predefinable allowable interval, or, on the contrary, if the size of the tensile force is lying within a given interval. The contacting member 9 or the base element 8 may be coupled to an optical element, which only indicates if it is an allowable tensile force in the strap or similar. In more advanced examples the pressure-sensitive organ may also be associated with a wireless communication element, which provides a signal to a centre or, for example, to the driver's cab in a truck or to a suitable checking place in a ship or similar.

Fig. 6 shows how a strap 30 in position of use effects a pressure-sensitive organ, for example when it is stretched with a lower force. A higher tensile force results in that the pressure-sensitive means 4 is pushed upwards, perpendicularly to the abutment elements (as, for example, is illustrated in Fig. 7), and the indication member 5 is pushed upwards, out of the housing.

Fig. 7 is a vertical cross section through pressure-sensitive means 4, and illustrates an example of embodiment of indication member with markings 11 and contacting member 9, as described above. It is obvious that the pressure-sensitive organ may be designed in many various ways, and it does not need to be bevelled as shown. In certain cases it might even be sufficient that it exhibits the same shape as the base element 8. The base element 8 may also be designed in many various ways, which should be obvious to the man skilled in the art.

Fig. 8 illustrates an alternative embodiment with a measuring device 200, whereby the first and the second connecting elements 2A₁, 2A₂, respectively, together with first and second abutment elements 1B₁, 1B₂ form in opposite directions extending, V-shaped structures with a shorter leg and a longer leg each. The longer legs are arranged in a first plane and form abutment elements 1_{A1}, 1A₂, and the shorter legs form first and second connecting elements 2A₁, 2A₂ with intermediate portions, which are angled so that the abutment elements 1A₁, 1A₂ will lie in another plane than the plane or planes, in which the connecting elements 2A_{1,} 2B₂ are lying. The abutment elements have the same length, are parallel and extend in opposite directions, so that in a first plane the two outer ends point in the same direction. They are rigidly connected by means of a straight line formed by the connecting elements, which are firmly associated with a third central element lying at a certain distance from said first plane. The connecting elements shall in position of use be arranged on top of a strap or similar, while the abutments elements shall be provided underneath the same and extend parallel to each other from a longitudinal side to the opposite side. As in the previous embodiment, the free outer ends of the abutment elements extend in opposite directions, so that they shall protrude somewhat outside, beyond, the respective longitudinal edge of a strap or similar in position of use. In this case the third element 3A comprises a square or rectangular housing, which may, of course, also be cylindrical or exhibit any other suitable shape, and the contacting member may be designed as described in some of the previous figures or in any other suitable way. Also the pressure-sensitive organ 4A may be designed in various ways; for example as in Fig. 7 or Fig. 1.

Fig. 9 illustrates a third embodiment of a device 300 with first and second abutment elements 1B₁, 1B₂ arranged in one plane, parallel to each other and in position of use adapted to project somewhat outside the respective longitudinal edges of a strap or similar. In position of use they are substantially perpendicular to the direction of extension of the strap, and the ends, which are opposite to the free outer ends, are associated with a respective connecting element 2B₁, 2B₂, which in position of use is adapted to exhibit first respective portions which are parallel to a strap on both sides of the strap and in a plane above this.

Thus, in a first plane the abutment elements, by means of intermediate angled elements, merge into first sections of the respective connecting element from said first plane, in position of use adapted to be located under a strap, to a second plane, which may be straight or inclined and which is located above a strap. Here, these first sections are associated with other sections, together with which they form straight angles, and which are parallel to the abutment elements and associated with a third element 3B, which may be designed as described in previous embodiments. The total length of a branch formed by the second sections and the third element is less than the length of the respective abutment elements.

Fig. 10 illustrates a fourth embodiment with a device 400 with abutment elements 1C₁, 1C₂ which are integral with the respective connecting elements 2C₁, 2C₂, which are firmly associated with or integral with a housing or a casing, which are part of a third element 3C adapted, in position of use, to be arranged above a strap or similar, and which forms a cosine curve from about 0° to about 450°. Figs. 8-10 are very schematic, and the cross sectional shapes of abutment elements and connecting element, respectively, may vary in many ways. Essential to all embodiments is that the device in a use preparing position may be placed on a strap or similar, and turned so that the abutment elements come to be placed under a strap, the indication member above, or in some other manner so that it will be easily visible or otherwise recognizable, and that the opposite lateral edges are surrounded by each one leg of the device, i.e. the fact that the abutment elements extend in opposite directions entails that the device is put safely in place on the strap, and it cannot come loose by mistake or get into a wrong position. At the same time it is very easy to apply and to remove.

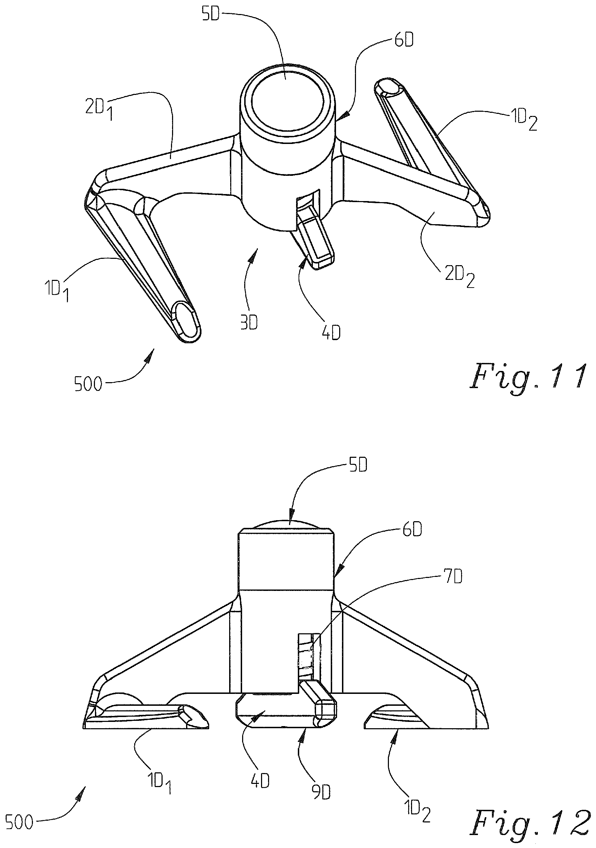

Figs. 11-14 show a device 500 according to a fifth embodiment. Corresponding elements have the same reference numerals as those in the other Figures, but with an index "D", and similar elements will not be further described.

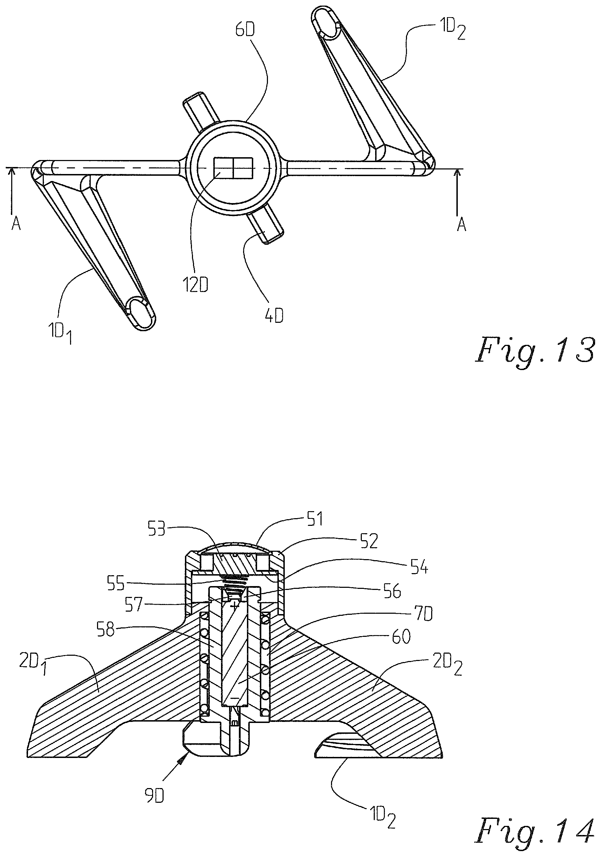

When the piston 58 (base element 8D), or the pressure-sensitive means 4D;4D, is pressed upwards (in contact with the strap, not shown), contact is provided between a contact spring 55 (see Fig. 14) which is arranged between a circuit board 54 (sensor) and a magnet 57, and a battery 52, which is provided in an opening in the piston 58. Then the magnetic field generated by the magnet can be sensed by a sensor connected to or comprised in the indicating means 5D which then, by means of e.g. a LED display 53, indicates a value or provides an indication which is proportional to the movement of the piston 58 (4D) (or dependent thereon). This value can then easily be read by a user. Preferably a protective glass or plastic cover is provided on top of the LED display, bearing against a housing 52. Connected to the main body with the connecting and abutment elements or to the third element or housing 6. As in the above described embodiments, the pressure-sensitive means 4D, or the piston 58, is spring biased by spring 7D. A calibration screw may be arranged to provide/push the battery in a desired, appropriate position. This is however not necessary and in other embodiments not needed. Generally its location is defined at the fabrication stage and the appropriate tolerances used.

Fig. 13 is a top view with digital indicating means 11D. The digital value is then indicative of the tension in the strap. Alternatively may simply different colours be indicated, e.g. green for accurate tensioning, red for non-satisfactory tensioning etc.

Different embodiments may be varied and combined in various ways; the outer edges may be bevelled or not, and also the third element may be designed in many various ways, as described above. Suitably, the device is essentially made of aluminium, normally apart from possible spring elements, screw and plate or means intended to attach the indication member to the casing, and so on. In a particularly advantageous example the entire device consists only of five parts; abutment element, connecting element and casing consists of one element, pressure-sensitive organ with contacting member and indication member of one element, further a spring, holding device, as screw and plate, or similar.

Examples of materials other than aluminium could be zinc or magnesium, or other composite materials or alloys, but also rigid plastic is conceivable.

The device may be used to ensure that correct tension is applied, but it may also be used for supervisory control, since the tensile force often decreases in course of time, and unpredicted events may affect the tensile force. The device is robust, durable and environment friendly. Furthermore, it is cheap to buy and dependable in service. Since the device is also compact, it may also be used where the space is very limited or at places which are difficult to reach, since it is small and easy to apply/remove. The device may be made of reusable material and it does not need to be varnished or painted. Thanks to its simple construction also the maintenance becomes easy and inexpensive. For example, the device may be blown through by means of a compressed air tool pistol in order to be cleaned, and lubricated; otherwise no maintenance is necessary.

It is neither limited to measuring of exemplified tensile forces, but may be used for higher as well as lower forces, and different indication intervals, limits, etc. may be chosen.

## Claims

1. Portable device (100; 200; 300; 400; 500) for measuring or controlling the tensile force in a strap for the lashing of a load, comprising: a first abutment element (1₁; 1A₁; 1B₁; 1C₁; 1D₁) and a second abutment element (1₂; 1A₂; 1B₂; 1C₂; 10D₂), which are arranged in a first plane, and which, in position of use for measuring or controlling the tensile force, come into contact with a side of a strap, which forms a lower side facing the load, a third element (3; 3A; 3B; 3C; 3D), which comprises a pressure-sensitive means (4), which, in position of use, is actuated by, or come into contact with, an upper side of a strap facing away from the load, whereby said first (1₁; 1A₁; 1B₁ 1C₁, 1D₁) and second abutment elements (1₂; 1A₂; 1B₂; 1C₂; 10₂) are arranged at the same distance from, and symmetrically in relation to, said third element (3; 3A; 3B; 3C; 3D), and
that said first and second abutment elements (1₁; 1₂; 1A₁; 1A₂; 1B₁; 1B₂; 1C₁; 1C₂; 1D₁; 1D₂) are connected to first and second outer end portions (2₁₁; 2₁₂), respectively, of a first and second connecting elements (2₁; 2₂; 2A₁; 2A₂; 2B₁; 2B₂; 2C₁; 2C₂; 2D₁; 2D₂),
which have first and second inner end portions, respectively, which are connected to said third element (3; 3A; 3B; 3C; 3D),
that said first and second abutment elements have first and second outer, free end portions respectively, which extend parallel to one another in said first plane and which point in substantially opposite directions, and
that the first and second outer end portions (2₁₁; 2₁₂;) of the connecting elements are arranged to form a first and a second intermediate portion, respectively, whereby there is a transition from the connecting elements, which at least partially are located in a second plane, to the abutment elements in said first plane, whereby said first intermediate portion forms a first angle, so that a first longitudinal lateral edge of a strap can be surrounded in the transition, and
that said second intermediate portion forms a second angle directed in opposite direction in relation to said first angle, so that a second longitudinal lateral edge of a strap, which is opposite to said first lateral edge, can be surrounded in the transition, and
that the pressure-sensitive means (4; 4D, 54) and indication members (5; 5D) provide information relating to the current tensile force in the strap,
**characterized in**
**that** the pressure-sensitive means (4; 4D) comprises:
a spring loaded (7; 7D) base element (8; 8D), which is slidably arranged in a housing (6; 6D), and which exhibits a protruding contacting member (9; 9D) which in position of use is adapted to come into contact with an upper side of the strap and press the base element (8; 8D) against the action of the spring (7; 7D), so that the base element (8; 8D) is pushed upwards in the housing depending on the current tensile force in the strap, that the base element (8; 8D), at the end opposite to the contacting member (9; 9D), is provided with indication element (11; 11D) which forms or is comprised by said indication member (5; 5D), and
**that** the indication element (11) comprises markings on the upper part of the base element (8) or in the casing, or
**that** indication member (11D) is electronically coupled to the pressure-sensitive means (4D) and is designed to provide information electronically, by means of a LED display (53) or in another way visually or acoustically, about the current tensile force, and that the pressure-sensitive means(4D; 54) comprises a base member (8D) or a piston (58) with a central hole for taking up a battery (60), a contact spring (55) adapted to be in contact with a magnet (57) and with one end of the battery and a sensor, comprising a printed circuit board, and that the sensor is adapted to sense the magnetic field or magnetic field generated by the magnet (57) variations when the piston (58) or base member (8D) is displaced due to a force excerted by the strap on the base element (8D) or piston, and that the sensor (55) is connected to an indicating means comprising a LED display (53) .

2. Device according to claim 1,
**characterized in**
**that** the first and second connecting elements (2₁; 2₂; 2A₁; 2A₂; 2B₁; 2B₂; 2C₁ 2C₂; 2D₁; 2D₂) are integral with the third element (3; 3A; 3B; 3C; 3D).

3. Device according to claim 1 or 2,
**characterized in**
**that** the first and second connecting elements (2₁; 2₂; 2A₁; 2A₂; 2B₁; 2B₂; 2C₁; 2C₂) are integral with the first and second abutment elements (1_{1;}1₂; 1A₁; 1A₂; 1B_{1;} 1B₂; 1C₁; 1C₂), respectively.

4. Device according to claims 1, 2 or 3,
**characterized in**
**that** the third element (3; 3A; 3B; 3C; 3D) comprises a housing or a casing (6; 6D), in which the pressure-sensitive means (4; 4D; 54) is accommodated.

5. Device (100; 200) according to anyone of the preceding claims,
**characterized in**
**that** the abutment elements ((1₁; 1₂; 1A₁; 1A₂), which are connected to the first and second connecting elements (2₁; 2₂; 2A₁; 2A₂), respectively, together with these essentially form a Z in two planes, whereby the first and second abutment elements extend in the first plane, and at least portions or parts of the connecting elements (2₁; 2₂; 2A₁; 2A₂), which connect to the third element (3A), lie in a second plane which is parallel to said first plane.

6. Device (400) according to anyone of claims 1-4,
**characterized in**
**that** the third element (3C), the first and second connecting elements (2C₁, 2C₂) and the abutment elements (1C₁, 1C₂) are designed to form an essentially cosine-shaped curve from about 0° to about 450°.

7. Device (200) according to anyone of claims 1-4,
**characterized in**
**that** said first and second connecting elements (2A₁, 2B₂), respectively, together with respective said first and second abutment elements (1A₁, 1B₂) form two in opposite directions extending, V-shaped structures, each with a shorter leg and a longer leg, respectively, whereby the longer legs are arranged in said first plane and form said abutment elements (1A₁, 1A₂), and the shorter legs form said first and second connecting elements (2A₁, 2A₂).

8. Device (100; 200; 400) according to anyone of the preceding claims,
**characterized in**
**that** said first connecting element and said second connecting element are arranged in a straight line in a plane, which cuts said first and second planes at an angle of 90° via said third element.

9. Device according to anyone of the preceding claims,
**characterized in**
**that** at least the first and second connecting elements and the first and second abutment elements are made of aluminium.

10. Device according to anyone of the preceding claims,
**characterized in**
**that** at least the connecting elements and the abutment elements are made of Mg or Zn.

11. Device according to anyone of the preceding claims,
**characterized in**
**that** the first and second free outer ends are bevelled in a direction towards said second plane in order to bring the device into the position of use.

12. Use of the device according to anyone of the claims 1-11,
**characterized in**
**that** the device, when placed on a strap, the current tensile force of which is to be measured, is turned round a vertical shaft through the centre of said third element, perpendicularly to said first plane, from a first use preparing position, in which the first free outer end is in a position close to a first longitudinal lateral edge of a strap, and the second free outer end is in a position close to a second, opposite, longitudinal lateral edge of the strap, into a position of use, in which the first free outer end is close to or outside, beyond, said second lateral edge, and said second free outer end is close to or outside, beyond, said first lateral edge, whereby said first and second abutment elements are in contact with the underside of the strap, which is facing the load, and the contacting member is in contact with and actuated by a current tensile force in the strap.

13. Method for measuring the tensile force in a strap, which is lashed around a load, with the use of a device according to anyone of the claims 1-11,
**characterized in**
**that** it comprises the steps to:
- place the device on the strap in a use preparing position, whereby the first free outer end is in a position close to a first longitudinal lateral edge of a strap, and the second free outer end is in a position close to a second, opposite longitudinal lateral edge of the strap,
- rotate the device into a position of use, in which the first free outer end is in a position close to or outside, beyond, the outer end is in a position close to the second longitudinal lateral edge of a strap, and the second free outer end is in a position very close to or outside, beyond, the first longitudinal lateral edge of the strap, and whereby said first and second abutment elements are in contact with the underside of the strap, which is facing a load, and the contacting member is in direct or indirect contact with the opposite side of the strap and is effected by the current tensile force in the strap,
- record, or read, the current tensile force on or by means of the indication member.

## Patentansprüche

1. Tragbare Vorrichtung (100; 200; 300; 400; 500) zum Messen oder Steuern der Zugkraft in einem Riemen für das Festzurren einer Last, umfassend: ein erstes Anschlagelement (1₁; 1A₁; 1B₁; 1C₁; 1D₁) und ein zweites Anschlagelement (1₂; 1A₂; 1B₂; 1C₂; 10D₂), die in einer ersten Ebene angeordnet sind und die in der Gebrauchsposition zum Messen oder Steuern der Zugkraft in Kontakt mit einer Seite eines Riemens kommen, der eine zu der Last weisende untere Seite bildet, ein drittes Element (3; 3A; 3B; 3C; 3D), das ein drucksensitives Mittel (4) umfasst, das in der Gebrauchsposition durch eine von der Last weg weisenden oberen Seite eines Riemens betätigt wird oder mit dieser in Kontakt tritt, wobei das erste (1₁; 1A₁; 1B₁; 1C₁; 1D₁) und zweite Anschlagelement (1₂; 1A₂; 1B₂; 1C₂; 10₂) unter derselben Distanz voneinander und symmetrisch in Bezug auf das dritte Element (3; 3A; 3B; 3C; 3D) angeordnet sind, und
dass das erste und zweite Anschlagelement (1₁; 1₂; 1Ai; 1A₂; 1B₁; 1B₂; 1C₁; 1C₂; 1D₁, 1D₂) mit dem ersten und zweiten äußeren Endabschnitt (2₁₁; 2₁₂) von jeweils einem ersten bzw. zweiten Verbindungselement (2₁; 2₂; 2A₁; 2A₂; 2B₁; 2B₂; 2C₁; 2C₂; 2D₁; 2D₂) verbunden sind, die einen ersten bzw. zweiten inneren Endabschnitt aufweisen, die mit dem dritten Element (3; 3A; 3B; 3C; 3D) verbunden sind,
dass das erste und zweite Anschlagelement einen ersten bzw. zweiten äußeren freien Endabschnitt aufweisen, die sich parallel zueinander in der ersten Ebene erstrecken und die in im Wesentlichen entgegengesetzte Richtungen zeigen, und
dass der erste und zweite äußere Endabschnitt (2₁₁; 2₁₂;) der Verbindungselemente angeordnet sind, um einen ersten bzw. einen zweiten Zwischenabschnitt zu bilden, wodurch ein Übergang von den Verbindungselementen, der zumindest teilweise in einer zweiten Ebene angeordnet ist, zu den Anschlagelementen in der ersten Ebene vorgesehen wird, wodurch der erste Zwischenabschnitt einen ersten Winkel bildet, so dass ein erster Längsseitenrand eines Riemens in dem Übergang umgeben sein kann, und dass der zweite Zwischenabschnitt einen zweiten Winkel bildet, der in entgegengesetzter Richtung in Bezug auf den ersten Winkel gerichtet ist, so dass ein zweiter Längsseitenrand eines Riemens, der dem ersten Längsrand entgegengesetzt ist, in dem Übergang umgeben sein kann, und
dass das drucksensitive Mittel (4; 4D, 54) und die Anzeigeelemente (5; 5D) Information bezüglich der aktuellen Zugkraft in dem Riemen bereitstellen,
**dadurch gekennzeichnet, dass**
das drucksensitive Mittel (4; 4D) umfasst:
ein federbelastetes (7; 7D) Basiselement (8; 8D), das verschiebbar in einem Gehäuse (6; 6D) angeordnet ist und ein vorragendes Kontaktelement (9; 9D) aufweist, das in der Gebrauchsposition derart angepasst ist, dass es in Kontakt mit einer oberen Seite des Riemens kommt und das Basiselement (8; 8D) gegen die Wirkung der Feder (7; 7D) presst, so dass das Basiselement (8; 8D) nach oben in dem Gehäuse abhängig von der aktuellen Zugkraft in dem Riemen gedrückt wird, so dass das Basiselement (8; 8D) an dem dem Kontaktelement (9; 9D) gegenüberliegenden Ende mit einem Anzeigeelement (11; 11D) versehen ist, das das Anzeigeelement (5; 5D) bildet oder dieses umfasst, und dass das Anzeigeelement (11) Markierungen an dem oberen Teil des Basiselements (8) oder in dem Gehäuse umfasst oder dass das Anzeigeelement (11D) elektrisch mit dem drucksensitiven Mittel (4D) gekoppelt und derart ausgelegt ist, Informationen elektronisch mittels einer LED-Anzeige (53) oder auf andere Weise visuell oder akustisch bezüglich der aktuellen Zugkraft bereitzustellen, und dass das drucksensitive Mittel (4D; 54) ein Basiselement (8D) oder einen Kolben (58) mit einem Zentralloch zum Aufnehmen einer Batterie (60), eine Kontaktfeder (55), die zum Kontakt mit einem Magneten (57) und mit einem Ende der Batterie angepasst ist, und einen Sensor umfasst, der eine gedruckte Leiterplatte umfasst, und dass der Sensor derart angepasst ist, das Magnetfeld oder durch Schwankungen des Magneten (57) erzeugte Magnetfeld zu erfassen, wenn der Kolben (58) oder das Basiselement (8D) aufgrund einer von dem Riemen auf das Basiselement (8D) oder den Kolben ausgeübten Kraft verstellt wird, und dass der Sensor (55) mit einem Anzeigemittel verbunden ist, das eine LED-Anzeige (53) umfasst.

2. Vorrichtung nach Anspruch 1,
**dadurch gekennzeichnet, dass**
das erste und zweite Verbindungselement (2₁; 2₂; 2A₁; 2A₂; 2B₁; 2B₂; 2C₁; 2C₂; 2D₁; 2D₂) einteilig mit dem dritten Element (3; 3A; 3B; 3C; 3D) sind.

3. Vorrichtung nach einem der Ansprüche 1 oder 2,
**dadurch gekennzeichnet, dass**
das erste und zweite Verbindungselement (2₁; 2₂; 2A₁; 2A₂; 2B₁; 2B₂; 2C₁; 2C₂) einteilig mit dem ersten bzw. zweiten Anschlagelement (1₁; 1₂; 1A₁; 1A₂; 1B₁; 1B₂; 1C₁; 1C₂) sind.

4. Vorrichtung nach einem der Ansprüche 1, 2 oder 3,
**dadurch gekennzeichnet, dass**
das dritte Element (3; 3A; 3B; 3C; 3D) ein Gehäuse oder eine Umhüllung (6; 6D) umfasst, in der das drucksensitive Mittel (4; 4D; 54) aufgenommen ist.

5. Vorrichtung (100; 200) nach einem der vorhergehenden Ansprüche,
**dadurch gekennzeichnet, dass**
die Anschlagelemente (1₁; 1₂; 1A₁; 1A₂), die mit dem ersten und zweiten Verbindungselement (2₁; 2₂; 2A₁; 2A₂) verbunden sind, gemeinsam mit diesen im Wesentlichen ein Z in zwei Ebenen bilden, wodurch das erste und zweite Anschlagelement sich in der ersten Ebene erstrecken, und zumindest Abschnitte oder Teile des Verbindungselementes (2₁; 2₂; 2A₁; 2A₂), die mit dem dritten Element (3A) verbunden sind, in einer zweiten Ebene liegen, die parallel zu der ersten Ebene ist.

6. Vorrichtung (400) nach einem der Ansprüche 1 bis 4,
**dadurch gekennzeichnet, dass**
das dritte Element (3C), das erste und zweite Verbindungselement (2C₁, 2C₂) und die Anschlagelemente (1C₁, 1C₂) so ausgelegt sind, eine im Wesentlichen kosinusförmige Kurve von 0° bis etwa 450° zu bilden.

7. Vorrichtung (200) nach einem der Ansprüche 1 bis 4,
**dadurch gekennzeichnet, dass**
das erste und zweite Verbindungselement (2A₁, 2B₂) jeweils zusammen mit den jeweiligen ersten und zweiten Anschlagelementen (1A₁, 1B₂) zwei sich in entgegengesetzte Richtungen erstreckende, V-förmige Strukturen bilden, und zwar jeweils mit einem kürzeren Schenkel und einem längeren Schenkel, wobei die längeren Schenkel in der ersten Ebene angeordnet sind und die Anschlagelemente (1A₁, 1A₂) bilden und die kürzeren Schenkel das erste und zweite Verbindungselement (2A₁, 2A₂) bilden.

8. Vorrichtung (100; 200; 400) nach einem der vorhergehenden Ansprüche,
**dadurch gekennzeichnet, dass**
das erste Verbindungselement und das zweite Verbindungselement in einer geraden Linie in einer Ebene angeordnet sind, die die erste und zweite Ebene unter einem Winkel von 90° über das dritte Element schneidet.

9. Vorrichtung nach einem der vorhergehenden Ansprüche,
**dadurch gekennzeichnet, dass**
zumindest das erste und zweite Verbindungselement und das erste und zweite Anschlagelement aus Aluminium bestehen.

10. Vorrichtung nach einem der vorhergehenden Ansprüche,
**dadurch gekennzeichnet, dass**
die Verbindungselemente und die Anschlagelemente aus Mg oder Zn bestehen.

11. Vorrichtung nach einem der vorhergehenden Ansprüche,
**dadurch gekennzeichnet, dass**
das erste und zweite freie äußere Ende in einer Richtung zu der zweiten Ebene hin angeschrägt sind, um die Vorrichtung in die Gebrauchsposition zu bringen.

12. Verwendung der Vorrichtung nach einem der Ansprüche 1 bis 11,
**dadurch gekennzeichnet, dass**
die Vorrichtung, wenn sie an einem Riemen angeordnet ist, dessen aktuelle Zugkraft zu messen ist, um eine vertikale Welle durch das Zentrum des dritten Elementes rechtwinklig zu der ersten Ebene von einer ersten Gebrauchsvorbereitungsposition, in der das erste freie äußere Ende in einer Position nahe einem ersten Längsseitenrand eines Riemens ist und das zweite freie äußere Ende in einer Position nahe einem zweiten gegenüberliegenden Längsseitenrand des Riemens ist, in eine Gebrauchsposition gedreht wird, in der das erste freie äußere Ende nahe oder außerhalb jenseits des zweiten Seitenrandes ist und das zweite freie äußere Ende nahe oder außerhalb jenseits des ersten Seitenrandes ist, wobei das erste und zweite Anschlagelement in Kontakt mit der Unterseite des Riemens stehen, die zu der Last weist, und das Kontaktelement in Kontakt mit dem Riemen steht und durch die aktuelle Zugkraft in dem Riemen betätigt ist.

13. Verfahren zum Messen der Zugkraft in einem Riemen, der um eine Last festgezurrt ist, mit dem Gebrauch einer Vorrichtung nach einem der Ansprüche 1 bis 11,
**dadurch gekennzeichnet, dass**
sie die Schritte umfasst, dass:
- die Vorrichtung an dem Riemen in einer Gebrauchsvorbereitungsposition angeordnet wird, in der der erste freie äußere Rand in einer Position nahe einem ersten Längsseitenrand eines Riemens ist und der zweite freie äußere Rand in einer Position nahe einem zweiten entgegengesetzten Längsseitenrand des Riemens ist,
- die Vorrichtung in eine Gebrauchsposition gedreht wird, in der das erste freie äußere Ende in einer Position nahe oder außerhalb jenseits des äußeren Endes in einer Position nahe dem zweiten Längsseitenrand eines Riemens ist und das zweite freie äußere Ende in einer Position sehr nahe zu oder außerhalb jenseits des ersten Längsseitenrandes des Riemens ist, wobei das erste und zweite Anschlagelement in Kontakt mit der Unterseite des Riemens stehen, die zu einer Last weist, und das Kontaktelement in direktem oder indirektem Kontakt mit der gegenüberliegenden Seite des Riemens steht und durch die aktuelle Zugkraft in dem Riemen bewirkt wird,
- die aktuelle Zugkraft an oder mittels des Anzeigeelementes aufgezeichnet oder gelesen wird.

## Revendications

1. Dispositif portable (100 ; 200 ; 300 ; 400 ; 500) pour mesurer ou vérifier la force de traction d'une sangle pour l'arrimage d'une charge, comprenant : un premier élément de butée (1₁ ; 1A₁ ; 1B₁ ; 1C₁ ; 1D₁) et un deuxième élément de butée (1₂ ; 1A₂ ; 1B₂ ; 1C₂ ; 10D₂), qui sont agencés dans un premier plan, et qui, en position d'utilisation pour mesurer ou vérifier la force de traction, viennent en contact avec une face d'une sangle, qui forme une face inférieure orientée vers la charge, un troisième élément (3 ; 3A ; 3B ; 3C ; 3D), qui comprend un moyen sensible à la pression (4), qui, en position d'utilisation, est actionné par, ou vient en contact avec, une face supérieure d'une sangle opposée à la charge, dans lequel lesdits premier (11 ; 1A₁ ; 1B₁ ; 1C₁ ; 1D₁) et deuxième éléments de butée (1₂ ; 1A₂ ; 1B₂ ; 1C₂ ; 10₂) sont agencés à la même distance dudit troisième élément (3 ; 3A ; 3B ; 3C ; 3D), et symétriquement par rapport à celui-ci, et
en ce que lesdits premier et deuxième éléments de butée (1₁ ; 1₂ ; 1A₁ ; 1A₂ ; 1B₁ ; 1B₂ ; 1C₁ ; 1C₂ ; 1D₁ ; 1D₂) sont raccordés à des première et seconde portions d'extrémité externes (2₁₁ ; 2₁₂), respectivement, d'un premier et d'un second éléments de raccordement (2₁ ; 2₂ ; 2A₁ ; 2A₂ ; 2B₁ ; 2B₂ ; 2C₁ ; 2C₂ ; 2D₁ ; 2D₂), qui comportent respectivement des première et seconde portions d'extrémité internes qui sont raccordées audit troisième élément (3 ; 3A ; 3B ; 3C ; 3D),
en ce que lesdits premier et deuxième éléments de butée comportent des première et seconde portions d'extrémité externes libres, respectivement, qui s'étendent parallèlement l'une à l'autre dans ledit premier plan et qui pointent dans des directions sensiblement opposées, et
en ce que les première et seconde portions d'extrémité externes (2₁₁ ; 2₁₂) des éléments de raccordement sont agencées pour former respectivement une première et une seconde portion intermédiaire dans lequel il existe une transition des éléments de raccordement, qui sont au moins partiellement situés dans un second plan, aux éléments de butée dans ledit premier plan, dans lequel ladite première portion intermédiaire forme un premier angle, de sorte qu'un premier bord latéral longitudinal d'une sangle peut être entouré dans la transition, et
en ce que ladite seconde portion intermédiaire forme un second angle dirigé dans la direction opposée audit premier angle, de sorte qu'un second bord latéral longitudinal d'une sangle, qui est opposé audit bord latéral, peut être entouré dans la transition, et
en ce que le moyen sensible à la pression (4 ; 4D, 54) et des pièces d'indication (5 ; 5D) fournissent des informations relatives à la force de traction réelle de la sangle,
**caractérisé en ce que** le moyen sensible à la pression (4 ; 4D) comprend :
un élément de base (8 ; 8D) à ressort (7 ; 7D), qui est agencé en coulissement dans un logement (6 ; 6D), et qui présente une pièce de mise en contact en saillie (9 ; 9D) qui en position d'utilisation est adaptée pour venir en contact avec une face supérieure de la sangle et presser l'élément de base (8 ; 8D) contre l'action du ressort (7 ; 7D), de sorte que l'élément de base (8 ; 8D) est poussé vers le haut dans le logement en fonction de la force de traction réelle de la sangle, **en ce que** l'élément de base (8 ; 8D), à l'extrémité opposée à la pièce de mise en contact (9 ; 9D), est doté d'un élément d'indication (11 ; 11D) qui forme ou est constitué de ladite pièce d'indication (5 ; 5D), et **en ce que** l'élément d'indication (11) comprend des inscriptions sur la partie supérieure de l'élément de base (8) ou dans le boîtier, ou
**en ce que** la pièce d'indication (11D) est couplée électroniquement au moyen sensible à la pression (4D) et est conçue pour fournir des informations électroniquement, au moyen d'un affichage à DEL (53) ou d'une autre manière visuellement ou acoustiquement, sur la force de traction réelle, et **en ce que** le moyen sensible à la pression (4D ; 54) comprend une pièce de base (8D) ou un piston (58) comportant un trou central pour accueillir une batterie (60), un ressort de contact (55) adapté pour être en contact avec un aimant (57) et avec une extrémité de la batterie et un capteur, comprenant une carte de circuit imprimé, et **en ce que** le capteur est adapté pour détecter le champ magnétique ou le champ magnétique généré par les variations de l'aimant (57) lorsque le piston (58) ou la pièce de base (8D) est déplacé(e) en raison d'une force exercée par la sangle sur l'élément de base (8D) ou le piston, et **en ce que** le capteur (55) est raccordé à un moyen d'indication comprenant un affichage à DEL (53).

2. Dispositif selon la revendication 1, **caractérisé en ce que** les premier et second éléments de raccordement (2₁ ; 2₂ ; 2A₁ ; 2A₂ , 2B₁ ; 2B₂ ; 2C₁ ; 2C₂ ; 2D₁ ; 2D₂) sont d'une seule pièce avec le troisième élément (3 ; 3A ; 3B ; 3C ; 3D).

3. Dispositif selon la revendication 1 ou 2, **caractérisé en ce que** les premier et second éléments de raccordement (2₁ ; 2₂ ; 2A₁ ; 2A₂ ; 2B₁ ; 2B₂ ; 2C₁ ; 2C₂) sont d'une seule pièce avec les premier et deuxième éléments de butée (1₁ ; 1₂ ; 1A₁ ; 1A₂; 1B₁ ; 1B₂ ; 1C₁ ; 1C₂), respectivement.

4. Dispositif selon les revendications 1, 2 ou 3, **caractérisé en ce que** le troisième élément (3 ; 3A ; 3B ; 3C ; 3D) comprend un logement ou un boîtier (6 ; 6D), dans lequel le moyen sensible à la pression (4 ; 4D ; 54) est logé.

5. Dispositif (100 ; 200) selon l'une quelconque des revendications précédentes, **caractérisé en ce que** les éléments de butée (1₁ ; 1₂ ; 1A₁ ; 1A₂), qui sont raccordés respectivement aux premier et second éléments de raccordement (2₁ ; 2₂ ; 2A₁ ; 2A₂) conjointement avec ceux-ci forment sensiblement un Z dans deux plans, dans lequel les premier et deuxième éléments de butée s'étendent dans le premier plan, et au moins des portions ou des parties des éléments de raccordement (2₁ ; 2₂ ; 2A₁ ; 2A₂), qui sont raccordées au troisième élément (3A), se trouvent dans un second plan qui est parallèle audit premier plan.

6. Dispositif (400) selon l'une quelconque des revendications 1 à 4, **caractérisé en ce que** le troisième élément (3C), les premier et second éléments de raccordement (2C₁, 2C₂) et les éléments de butée (1C₁, 1C₂) sont conçus pour former une courbe de forme sensiblement cosinusoïdale d'environ 0° à environ 450°.

7. Dispositif (200) selon l'une quelconque des revendications 1 à 4, **caractérisé en ce que** respectivement lesdits premier et second éléments de raccordement (2A₁, 2B₂) conjointement avec lesdits premier et deuxième éléments de butée (1A₁, 1B₂) respectifs forment deux structures en forme de V s'étendant dans des directions opposées, chacune comportant respectivement une jambe plus courte et une jambe plus longue dans lequel les jambes plus longues sont agencées dans ledit premier plan et forment lesdits éléments de butée (1A₁, 1A₂), et les jambes plus courtes forment lesdits premier et second éléments de raccordement (2A₁, 2A₂).

8. Dispositif (100 ; 200; 400) selon l'une quelconque des revendications précédentes, **caractérisé en ce que** ledit premier élément de raccordement et ledit second élément de raccordement sont agencés en une ligne droite dans un plan, qui coupe lesdits premier et second plans à un angle de 90° via ledit troisième élément.

9. Dispositif selon l'une quelconque des revendications précédentes, **caractérisé en ce qu'**au moins les premier et second éléments de raccordement et les premier et deuxième éléments de butée sont faits en aluminium.

10. Dispositif selon l'une quelconque des revendications précédentes, **caractérisé en ce qu'**au moins les éléments de raccordement et les éléments de butée sont faits en Mg ou en Zn.

11. Dispositif selon l'une quelconque des revendications précédentes, **caractérisé en ce que** les première et seconde extrémités externes libres sont biseautées dans une direction dirigée vers ledit second plan afin d'amener le dispositif dans la position d'utilisation.

12. Utilisation du dispositif selon l'une quelconque des revendications 1 à 11, **caractérisé en ce que** le dispositif, lorsqu'il est placé sur une sangle dont la force de traction réelle doit être mesurée, est tourné autour d'un arbre vertical à travers le centre dudit troisième élément, perpendiculairement audit premier plan, à partir d'une première position de préparation d'utilisation, dans laquelle la première extrémité externe libre est dans une position proche d'un premier bord latéral longitudinal d'une sangle, et la seconde extrémité externe libre est dans une position proche d'un second bord latéral longitudinal opposé de la sangle, dans une position d'utilisation, dans laquelle la première extrémité externe libre est proche de ou à l'extérieur, au-delà dudit second bord latéral, et ladite seconde extrémité externe libre est proche de ou à l'extérieur, au-delà dudit premier bord latéral, dans laquelle lesdits premier et deuxième éléments de butée sont en contact avec la face inférieure de la sangle, qui est orientée vers la charge, et la pièce de mise en contact est en contact avec et actionnée par une force de traction réelle de la sangle.

13. Procédé pour mesurer la force de traction d'une sangle, qui est arrimée autour d'une charge, en utilisant un dispositif selon l'une quelconque des revendications 1 à 11, **caractérisé en ce qu'**il comprend les étapes consistant à :
- placer le dispositif sur la sangle dans une position de préparation d'utilisation, dans laquelle la première extrémité externe libre est dans une position proche d'un premier bord latéral longitudinal d'une sangle, et la seconde extrémité externe libre est dans une position proche d'un second bord latéral longitudinal opposé de la sangle,
- faire tourner le dispositif dans une position d'utilisation, dans lequel la première extrémité externe libre est dans une position proche de ou à l'extérieur, au-delà, l'extrémité externe est dans une position proche du second bord latéral longitudinal d'une sangle, et la seconde extrémité externe libre est dans une position très proche de ou à l'extérieur, au-delà du premier bord latéral longitudinal de la sangle, et dans lequel lesdits premier et deuxième éléments de butée sont en contact avec la face inférieure de la sangle, qui est orientée vers une charge, et la pièce de mise en contact est en contact direct ou indirect avec la face opposée de la sangle et est affectée par la force de traction réelle de la sangle,
- enregistrer, ou lire, la force de traction réelle sur ou au moyen de la pièce d'indication.
